(19) Europäisches Patentamt

European Patent Office

Office européen des brevets

(11) **EP 0 918 948 B1**

(12) **EUROPÄISCHE PATENTSCHRIFT**

(45) Veröffentlichungstag und Bekanntmachung des Hinweises auf die Patenterteilung:
**02.01.2002  Patentblatt 2002/01**

(51) Int Cl.[7]: **F16D 3/223**

(21) Anmeldenummer: **97935512.0**

(22) Anmeldetag: **05.07.1997**

(86) Internationale Anmeldenummer:
**PCT/EP97/03559**

(87) Internationale Veröffentlichungsnummer:
**WO 98/08000 (26.02.1998 Gazette 1998/08)**

(54) **KUGELGLEICHLAUFDREHGELENK MIT OPTIMIERTEM ROLLFEHLER**

HOMOCINETIC BALL-AND-SOCKET JOINT WITH OPTIMIZED ROLL ERROR

JOINT SPHERIQUE HOMOCINETIQUE A ERREUR DE ROULEMENT OPTIMISEE

(84) Benannte Vertragsstaaten:
**FR GB IT**

(30) Priorität: **17.08.1996  DE 19633166**

(43) Veröffentlichungstag der Anmeldung:
**02.06.1999  Patentblatt 1999/22**

(73) Patentinhaber: **GKN Löbro GmbH
63073 Offenbach am Main (DE)**

(72) Erfinder: **SCHWÄRZLER, Peter
D-63864 Glattbach (DE)**

(74) Vertreter: **Neumann, Ernst Dieter, Dipl.-Ing. et al
Harwardt Neumann Patent- und Rechtsanwälte,
Brandstrasse 10
53721 Siegburg (DE)**

(56) Entgegenhaltungen:
**WO-A-93/16296          US-A- 4 861 316**

EP 0 918 948 B1

**Beschreibung**

Die Erfindung betrifft ein Kugelgleichlaufdrehgelenk in Festgelenkbauart mit einem Gelenkaußenteil mit innen längsverlaufenden gekrümmten äußeren Kugelbahnen, einem Gelenkinnenteil mit außen längsverlaufenden gekrümmten inneren Kugelbahnen, einer Mehrzahl von drehmomentübertragenden Kugeln, die jeweils in einander zugeordneten äußeren und inneren Kugelbahnen geführt sind, und einem Kugelkäfig mit einer Mehrzahl von Käfigfenstern, in denen die Kugeln jeweils aufgenommen sind, wobei die Tangentialebenen an die Kugeln in den bei der Drehmomentübertragung wirksamen Kontaktpunkten der Kugeln mit den äußeren und inneren Kugelbahnen einen räumlichen Steuerwinkel K definieren und wobei die Überlagerung (Superposition) der momentanen örtlichen Relativgeschwindigkeiten in den Kontaktpunkten der äußeren und inneren Kugelbahnen und der Kugeln den Rollfehler Δv definiert.

Gelenke dieser Art sind aus der DE 39 39 531 C1 bekannt. Diese bisher bekannten und ausgeführten Kugelgleichlaufdrehgelenke haben eine bei großem Beugewinkel stark reduzierte Belastbarkeit. Sie erzeugen zum Teil bei großen Beugewinkeln kratzende Geräusche. Diese Geräusche werden auf Gleitbewegungen zwischen den Kugeln und den Kugelbahnen zurückgeführt, die in dem bei jedem Gleichlaufdrehgelenk vorhandenen Rollfehler begründet sind. Hierbei ist zu berücksichtigen, daß die Belastungen auf die einzelnen Kugeln und der Rollfehler der Kugeln während einer Umdrehung des Gelenkes stark variieren und daß an den Stellen minimaler Steuerwinkel etwa die höchsten als Normalkräfte wirkenden Belastungen der Kugeln auftreten und dort auch große Rollfehler vorhanden sind. Die Konsequenz sind große Gleitanteile in den Kontaktpunkten unter hohen Normalkräften und damit ein hoher Reibenergieverlust. Damit verbunden sind hoher Verschleiß, große Erwärmung und eine Neigung zu Kratzgeräuschen.

Als Rollfehler Δv kann die momentane Geschwindigkeitskomponente der Bewegung eines Kugelmittelpunktes betrachtet werden, mit der eine Kugel die Käfigebene verlassen würde, sofern sie nicht vom Käfig zurückgehalten würde und sofern in den Kugelkontaktpunkten zu den Kugelbahnen des Gelenkstücks (Gelenkaußenteil) und der Kugelnabe (Gelenkinnenteil) kein Gleiten auftreten würde.

Bei gebeugten Gleichlaufgelenken sind die Kugeln aufgrund des Rollfehlers Δv zumeist bestrebt, die Käfigebene zu verlassen. Diesem Bestreben muß der Käfig entgegenwirken, indem er die Kugeln entgegen ihrer Rolltendenz gegenüber den Kugelbahnen verschiebt.

Ohne die Funktion des Käfigs würden die Kugeln nur in der winkelhalbierenden Ebene bleiben, wenn der Rollfehler Δv gleich 0 ist. Unter dieser Bedingung rollen die Kugeln in ihren beiden Berührpunkten ab und bleiben dennoch auf ihrer Position in der Käfigebene.

Der Rollfehler Δv ist abhängig vom jeweiligen Phasenwinkel Θ der Kugeln bezüglich der durch die Achsen der Gelenkbauteile aufgespannten Gelenkbeugeebene.

Die Rollbedingung, Δv gleich 0, bei der die Kugeln von sich aus in der Käfigebene bleiben, wird während einer Umdrehung des Gelenks für jede Kugel nur bei zwei Phasenlagen erfüllt.

Bei allen anderen Phasenwinkeln muß der Käfig die Kugeln in der Käfigebene halten und es tritt ein Gleiten der Kugeln in den Berührpunkten mit den Kugelbahnen auf.

Ebenfalls über dem Phasenwinkel Θ ändert sich der Verlauf der Abstützkräfte auf die Kugeln. Dies sind die unter dem Kontaktwinkel δ auf die Kugeln einwirkenden Normalkräfte.

Nachteilig an den bekannten Gelenken ist es, daß in den Bereichen mit großen Abstützkräften ein erheblicher Rollfehler vorhanden ist. Große Rollfehler, d. h. große Gleitanteile kombiniert mit großen Abstützkräften haben zur Folge, daß hohe Reibung und damit verbunden hoher Verschleiß entsteht, weiterhin aber auch hohe innere Gelenkkräfte, die die maximale Belastbarkeit des Gelenkes, insbesondere des Käfigs herabsetzen.

Von vorstehendem ausgehend liegt der Erfindung die Aufgabe zugrunde, Kugelgleichlaufdrehgelenke in Festgelenkbauart bereitzustellen, die verringerte Reibungskräfte in gebeugtem Betrieb und damit geringen Verschleiß und höhere Drehmomentkapazität aufweisen.

Nach einer ersten erfindungsgemäßen Lösung wird vorgeschlagen, daß die Mittellinien einander zugeordneten äußeren und inneren Kugelbahnen bei gestrecktem Gelenk jeweils in Ebenen BB liegen, die zu radialen Bezugsebenen YZ durch die zusammenfallenden Mittelachsen des Gelenkaußenteils und des Gelenkinnenteils parallel und in übereinstimmendem Umfangssinn versetzt sind, so daß die Bahnen so gestaltet sind, daß bei gebeugtem Gelenk minimale Steuerwinkel K mit Bereichen minimaler Rollfehler Δv zusammenfallen.

Nach einer zweiten erfindungsgemäßen Lösung ist vorgesehen, daß die Mittellinien der einander zugeordneten äußeren und inneren Kugelbahnen bei gestrecktem Gelenk in einer radialen Ebene AA durch die zusammenfallenden Mittelachsen des Gelenkaußenteils und des Gelenkinnenteils liegen und Kreisbögen umfassen, deren Krümmungsradius $R_1$ geringer ist als der Rollkreisradius $R_0$, so daß die Bahnen so gestaltet sind, daß bei gebeugtem Gelenk minimale Steuerwinkel K mit Bereichen minimaler Rollfehler Δv zusammenfallen.

Günstige Ausgestaltungen und Weiterbildungen sind in den Unteransprüchen beschrieben, auf deren Inhalt hiermit Bezug genommen wird.

Indem die Bereiche geringer räumlicher Steuerwinkel in die Bereiche geringer Rollfehler verlegt werden, kommen hohe Abstützkräfte, die bei geringen räumlichen Steuerwinkeln auftreten, in Perioden nahezu reiner Rollbewegung der Kugeln zu liegen.

Bevorzugte Ausgestaltungen der erfindungsgemäßen Lösung werden nachstehend im Vergleich zum Stand der Technik anhand der Zeichnungen beschrieben. Hierin zeigen

Fig. 1 ein bekanntes gattungsgemäßes Kugelgleichlaufdrehgelenk in Festgelenkbauart

    a) in Axialansicht
    b) im Längsschnitt;

Fig. 2 Kugeln eines gattungsgemäßen Gelenks nach Fig. 1 in verschiedenen Phasenlagen

    a) in Axialansicht auf das Gelenk
    b) im Längsschnitt durch das Gelenk

Fig. 3 eine erste erfindungsgemäße Bahngestaltung mit unsymmetrischen Bahnverläufen

    a) in Axialansicht auf das Gelenk
    b) im Längsschnitt durch das Gelenk;

Fig. 4 eine Abwandlung eines Bahnverlaufs nach Figur 3 im Längsschnitt;

Fig. 5 eine zweite erfindungsgemäße Bahngestaltung mit Bahnen enger Krümmung

    a) in Axialansicht auf das Gelenk
    b) im Längsschnitt durch das Gelenk;

Fig. 6 eine Abwandlung eines Bahnverlaufs nach Figur 5 im Längsschnitt;

Fig. 7 eine konstruktive Ausgestaltung eines Gelenks mit Bahnverläufen nach den Figuren 3 und 5;

Fig. 8 Kennwerte an einer Kugel eines gattungsgemäßen Gelenks nach dem Stand der Technik bei gebeugtem Gelenk über dem Phasenwinkel, nämlich

    a) räumlicher Steuerwinkel K
    b) Übertragungskräfte $F_n$
    c) Rollfehler $\Delta v$

    jeweils über dem Phasenwinkel $\Theta$ aufgetragen;

Fig. 9 Kennwerte an einer Kugel eines erfindungsgemäßen Gelenks nach Figur 3, nämlich

    a) räumlicher Steuerwinkel K

    b) Rollfehler $\Delta v$

    jeweils über dem Phasenwinkel $\Theta$ aufgetragen;

Fig. 10 Kennwerte an einer Kugel eines erfindungsgemäßen Gelenks nach Figur 4, nämlich

    a) räumlicher Steuerwinkel K
    b) Rollfehler $\Delta v$

    jeweils über dem Phasenwinkel $\Theta$ aufgetragen;

Fig. 11 Kennwerte an einer Kugel eines erfindungsgemäßen Gelenks nach Figur 5, nämlich

    a) räumlicher Steuerwinkel K
    b) Rollfehler $\Delta v$

    jeweils über dem Phasenwinkel $\Theta$ aufgetragen;

Fig. 12 Kennwerte an einer Kugel eines erfindungsgemäßen Gelenks nach Figur 6, nämlich

    a) räumlicher Steuerwinkel K
    b) Rollfehler $\Delta v$

    jeweils über dem Phasenwinkel $\Theta$ aufgetragen.

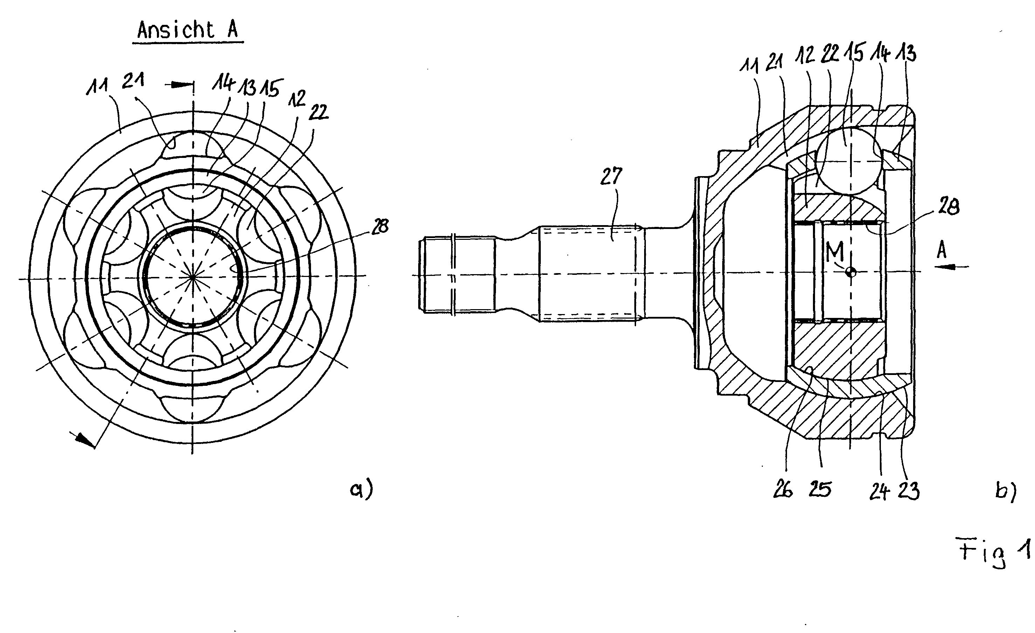

Die beiden Darstellungen der Figur 1 werden nachstehend gemeinsam beschrieben. Das Kugelgleichlaufdrehgelenk umfaßt ein Gelenkaußenteil 11, auch Gelenkstück genannt, ein Gelenkinnenteil 12, auch Kugelnabe genannt, einen Kugelkäfig 13 mit Käfigfenstern 14 sowie in den Käfigfenstern gehaltenen Kugeln 15. Die Kugeln greifen in äußere Kugelbahnen 21 im Gelenkaußenteil und innere Kugelbahnen 22 im Gelenkinnenteil ein. Die Bahnen sind in Ansicht A betrachtet hinterschnittfrei, so daß das Gelenk als UF-Gelenk (undercutfree) bezeichnet wird. Die äußere Kugelfläche 23 des Käfigs ist in einer inneren Kugelfläche 24 des Gelenkaußenteils 11 geführt, so daß das Gelenk ein Festgelenk darstellt, das um einen festen Gelenkmittelpunkt M schwenkt. In ähnlicher Weise ist die kugelige Außenfläche 25 des Gelenkinnenteils in einer innenkugeligen Fläche 26 des Kugelkäfigs geführt. Am Gelenkaußenteil 11 ist ein wellenverzahnter Zapfen 27 angesetzt. Das Gelenkinnenteil 12 hat eine wellenverzahnte Innenöffnung 28 zum Einschieben einer Welle.

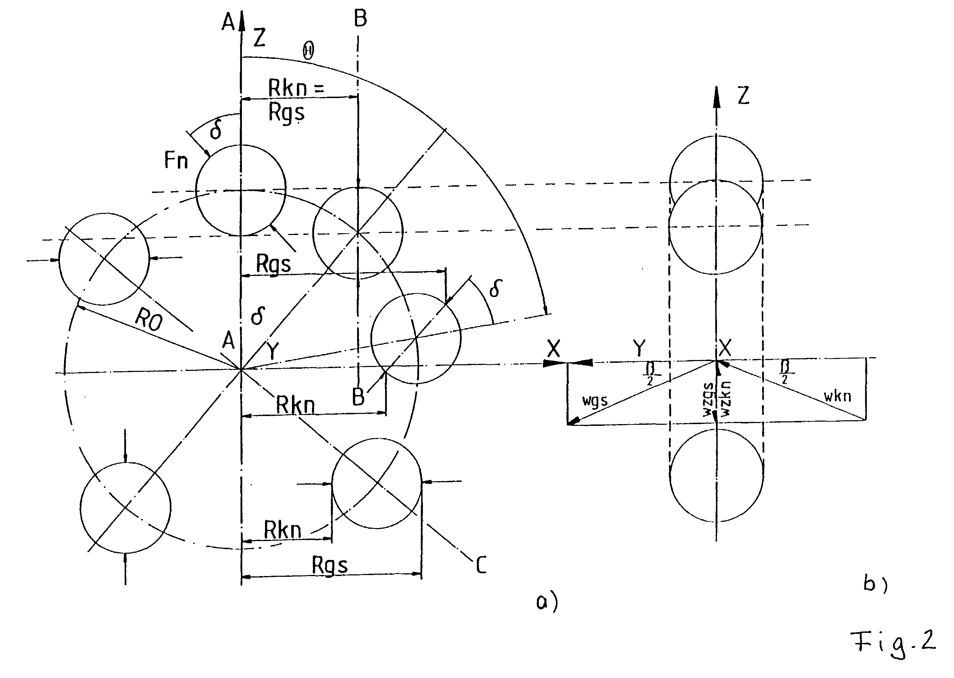

In Figur 2 sind nicht näher bezeichnete Kugeln in verschiedenen Phasenlagen dargestellt, die durch den Phasenwinkel $\Theta$ ausgehend von einer angenommenen Gelenkbeugeebene XZ bezeichnet werden. Die Kugeldarstellungen sind hierbei ohne feste Zuordnung zueinander, d. h. es handelt sich nicht um die Mehrzahl von Kugeln eines Gelenkes in ihrer funktionsgerechten durch den Käfig bestimmten Abstandsposition, sondern um verschiedene Phasenlagen einer Kugel auf ihrer annähernden Kreisbahn bei gebeugt umlaufenden Gelenk. Hierbei ist die durch die Mittelebene des Kugelkäfigs gegebene gemeinsame Kugelebene XZ links durch die Zeichnungsebene und rechts senkrecht zur Zeichnungsebene wiedergegeben. Gegenüber dieser Ebene XZ beugen sich die beiden übrigen Gelenkbauteile - Gelenkaußenteil, Gelenkinnenteil - um gleich große entgegengesetzt gerichtete halbe Beugewinkel ab.

Unter Bezugnahme auf die Figur 2 wird nachfolgend der Rollfehler bei Gleichlaufdrehgelenken beschrieben, wobei für den Begriff Gelenkaußenteil gleichbedeutend auch Gelenkstück, für den Begriff Gelenkinnenteil gleichbedeutend auch Kugelnabe und im übrigen folgende Zeichen verwendet werden:

$\Delta v$ - Rollfehler

$v_{kn}$ - momentane Geschwindigkeitskomponente am Berührpunkt der Kugelnabe zur Kugel

$v_{gs}$ - momentane Geschwindigkeitskomponente am Berührpunkt des Gelenkstücks zur Kugel

$R_0$ - Radius des Rollkreises der Kugeln

$R_{kn}$ - Radius von der Gelenkbeugeebene zum Berührpunkt der Kugel mit der Kugelnabe

$R_{gs}$ - Radius von der Gelenkbeugeebene zum Berührpunkt der Kugel mit dem Gelenkstück

$\omega_{kn}$ - Winkelgeschwindigkeit der Kugelnabe

$\omega_{gs}$ - Winkelgeschwindigkeit des Gelenkstücks

$\omega_{zgs}$ - Vertikalkomponente der Winkelgeschwindigkeit des Gelenkstücks

$\omega_{zkn}$ - Vertikalkomponente der Winkelgeschwindigkeit der Kugelnabe

$\Theta$ - Phasenwinkel einer Kugel bezogen auf die Gelenkbeugeebene

$\delta$ - Druckwinkel der Abstützkräfte auf eine Kugel.

Das Bezugssystem XYZ ist in der Figur 2 durch die Käfigebene XZ und die Käfigachse Y aufgespannt. Die Ebene XZ ist die winkelhalbierende Ebene zwischen den Achsen des Gelenkstücks und der Kugelnabe, auf der die Kugeln eines Gleichlaufdrehgelenks gehalten werden sollen. Die Ebene YZ ist die Gelenkbeugeebene, das heißt die von den Achsen vom Gelenkstück und Kugelnabe aufgespannte Ebene. Die an den Kugeln unter dem Winkel $\delta$ eingezeichneten Vektorpaare sind die Abstützkräfte oder Normalkräfte $F_n$ in den Berührpunkten. Das Vektordiagramm zeigt die Rotationsachsen und die jeweiligen Momentandrehbewegungen. Als Rollfehler $\Delta v$ kann die monentane Geschwindigkeitskomponente der Bewegung eines Kugelmittelpunktes betrachtet werden, mit der eine Kugel die Käfigebene verlassen würde, sofern in den Kugelkontaktpunkten zu den Kugelbahnen des Gelenkstücks und der Kugelnabe kein Gleiten auftreten würde: $\Delta v = 1/2 \, (v_{kn} + v_{gs})$.

Der Rollfehler $\Delta v$ ist dabei abhängig vom jeweiligen Phasenwinkel $\Theta$ einer Kugel bezüglich ihrer Stellung zu der durch die Achsen der Gelenkbauteile aufgespannten Gelenkbeugeebene YZ. Die Bedingung, bei der die Kugeln von sich aus in der Käfigebene bleiben ist, daß der Rollfehler $\Delta v = 0$ ist.

Dies ist gegeben, wenn folgende Bedingung erfüllt ist:

$$\Delta v = 0 = v_{kn} + v_{gs}$$

$v_{kn}$ ist dabei die momentane Geschwindigkeitskomponente am Berührpunkt der Kugelnabe mit einer Kugel senkrecht zur Käfigebene; $v_{gs}$ die momentane Geschwindigkeitskomponente am Berührpunkt des Gelenkstücks mit einer Kugel senkrecht zur Käfigebene. Nur wenn diese Geschwindigkeiten im Betrag gleich groß und entgegengesetzt gerichtet sind, ist der Rollfehler $\Delta v$ gleich 0.

Somit muß gelten:

$$0 = R_{kn} \cdot \omega_{zkn} + R_{gs} \cdot \omega_{zgs}.$$

Dies wird erfüllt für $R_{kn} = R_{gs}$. Diese Bedingung wird während einer Umdrehung des Gelenks nur bei zwei Phasenlagen erfüllt.

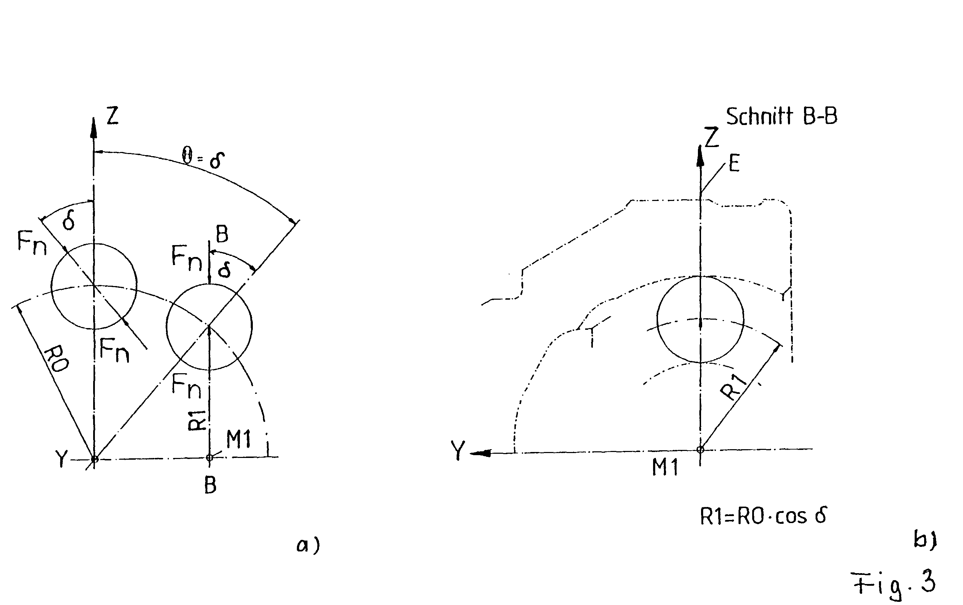

In Figur 3 ist links die Kugellage im Querschnitt durch ein erfindungsgemäßes Gelenk und rechts ein Längsschnitt durch ein entsprechendes erfindungsgemäßes Gelenk gemäß der Ebene BB angedeutet, die auch in Figur 2 parallel zur Gelenkbeugeebene YZ eingetragen ist. Es ist eine Radialachse YZ durch den Mittelpunkt des Gelenks erkennbar, die im weiteren als Bezugsebene dient. In der Achse Z liegt eine erste Kugel, an der unter dem Kontaktwinkel $\delta$ die Abstützkräfte angreifen. Unter einem Winkel $\Theta$, der dem Kontaktwinkel $\delta$ entspricht, ist ein Strahl eingezeichnet. Befindet sich eine Kugel in dieser Lage, so sind die Normalkräfte $F_n$ in den Kugelkontaktpunkten parallel zur Ebene YZ. Der Kugelmittelpunkt liegt dabei auf dem Schnittpunkt dieses Strahls mit dem Rollkreis vom Durchmesser $R_0$. Durch diesen Kugelmittelpunkt und parallel zur Bezugsebene YZ ist die Ebene BB bestimmt.

Wir rechts im Schnitt erkennbar ist, definiert und enthält diese Ebene BB die kreisförmigen Mittellinien der Kugelbahnen im Gelenkaußenteil und im Gelenkinnenteil mit dem Krümmungsradius $R_1$ um den gemeinsamen Mittelpunkt $M_1$, der auf der Achse X des Rollkreises und in der Ebene BB liegt. Die im Schnitt BB dargestellten Bahnen sind real abgebildet, d. h. auf einen Längsschnitt durch die Gelenkachsen bezogen, verlaufen die Bahnen im Gelenkinnenteil und im Gelenkaußenteil in einer parallel versetzten Ebene.

Dieser Bahnverlauf hat den Effekt, daß an diesen Stellen die Normalkräfte in der Ebene BB (Rollfehler $\Delta v = 0$) und senkrecht zur Ebene XY (Steuerwinkel K = 0) liegen. Es fallen also die Bedingungen Rollfehler $\Delta v$

= 0 und Steuerwinkel K = 0 zusammen, was erfindungsgemäß ausgenutzt wird, um zu erreichen, daß dort, wo die großen Normalkräfte sind (kleine Steuerwinkel), auch kleine Rollfehler vorhanden sind.

Die in der Ebene BB geschnitten dargestellte Bahn bringt aufgrund der übereinstimmenden Mittelpunktslage der Krümmungsradien bei gestrecktem Gelenk keine Steuerkräfte und damit keine Zentrierwirkung für den Käfig auf, so daß diesbezüglich Verbesserungen möglich sind.

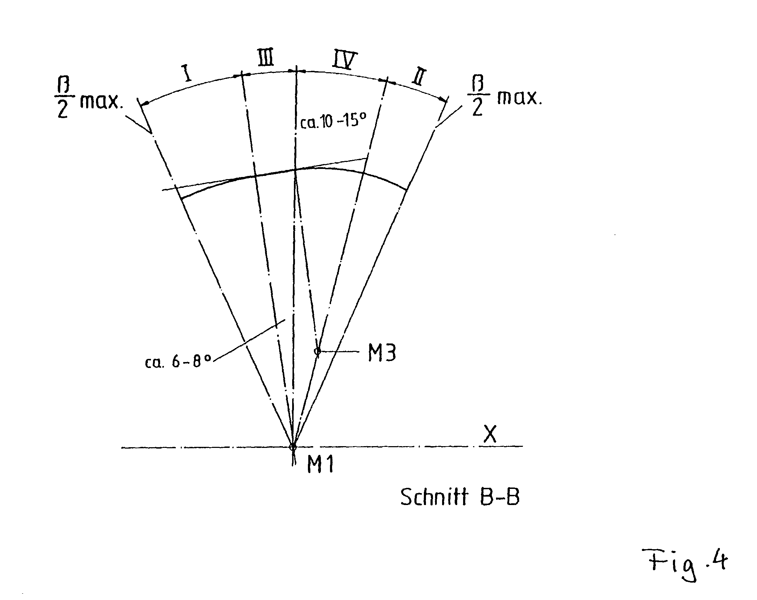

In Figur 4 ist ein Bahnverlauf gezeigt, der gegenüber dem in Figur 3 abgewandelt ist und in die Ebene BB der Figur 3 übertragbar ist. Es sind hierbei vier verschiedene Kurvenbereiche mit zwei verschiedenen Mittelpunkten dargestellt, die wie folgt zu verstehen sind.

I - ein Kreisbogen um $M_1$

III - eine tangential anschließende Gerade mit einem Winkel mit ca. 6 bis 8° zur Y-Richtung

IV - einen tangential an III anschließenden Kreisbogen um $M_3$

II - einen tangential an IV anschließenden Kreisbogen um $M_1$.

Mit dieser Anordnung wird bewirkt, daß die erfindungsgemäße Bedingung, kleine Rollfehler bei hohen Normalkräften, zumindest bei großen Gelenkbeugewinkeln realisiert ist. Das ist insofern wichtig, als mit zunehmenden Beugewinkeln die Maxima der Normalkräfte anwachsen.

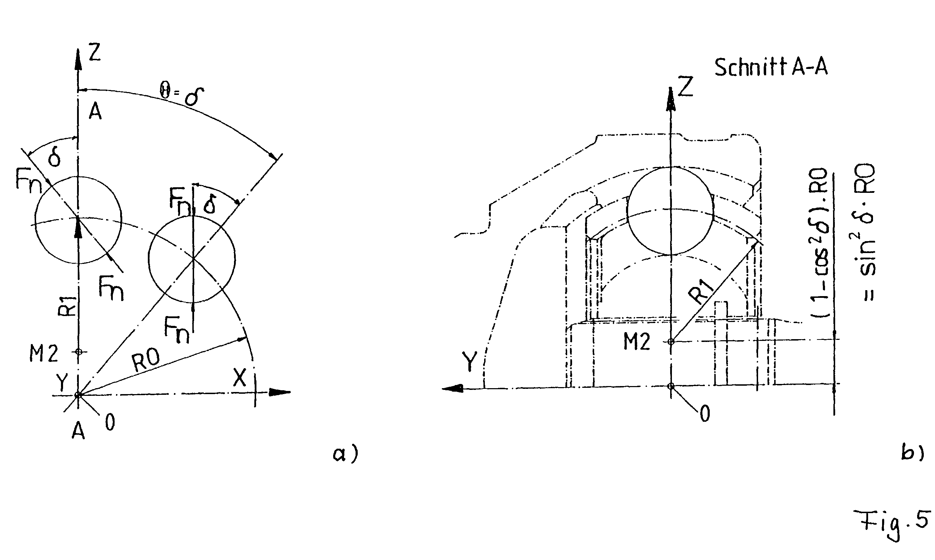

In Figur 5 ist links die Kugelanordnung eines erfindungsgemäßen Gelenks im Teilquerschnitt mit zwei Kugelnpositionen gezeigt und rechts das entsprechende erfindungsgemäße Gelenk im Längsschnitt durch die Ebene AA. Es ist eine erste Radialachse Z bezeichnet, in der sich eine Kugel zuerst befindet. An den Kugeln sind jeweils die Abstützkräfte unter dem Kontaktwinkel $\delta$ gezeigt. Unter einem Phasenwinkel von $\Theta = \delta$ ist ein Strahl eingezeichnet, der eine zweite Kugelposition bestimmt. Die Ebene YZ ist, wie auch in Figur 2 angezeigt, gleichzeitig die Schnittebene AA, die rechts erkennbar ist. In dieser Ebene, die richtig abgebildet ist, liegen die Mittellinien der Bahnen im Gelenkaußenteil und im Gelenkinnenteil, die den Krümmungsradius $R_1$ um einen gemeinsamen Mittelpunkt $M_2$ haben, der in der Ebene AA, jedoch mit Abstand zur Längsmittelachse Y des Gelenkes liegt. Der Abstand des Mittelpunktes $M_2$ zur Achse beträgt $(\sin^2\delta)\, R_0$, wobei $R_0$ der Rollkreisdurchmesser ist; der Radius $R_1$ selber beträgt dementsprechend $R_0 \cos^2\delta$. Durch die Verkleinerung der Radien sind im Bereich der großen Aktivkräfte die Geschwindigkeitsdifferenzen zwischen den Kontaktpunkten der Kugelnabe bzw. des Gelenkstücks mit der Kugel reduziert, während im Bereich geringerer Aktivkräfte größere Rollfehler auftreten können.

Da die Kugelbahnen in der Ebene AA aufgrund der übereinstimmenden Mittelpunktslage der Krümmungsradien bei kleinen Gelenkbeugewinkeln keine Steuerkräfte auf die Kugel und damit keine Rückstellkräfte auf den Käfig ausüben, sind Verbesserungen bezüglich der Steuerung des Käfigs möglich.

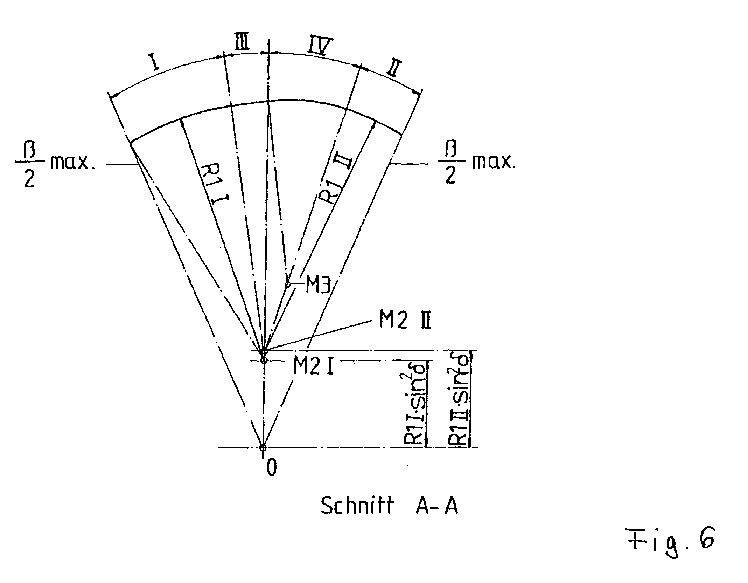

In Figur 6 ist ein Bahnverlauf dargestellt, der eine gegenüber in Figur 5 abgewandelte Form betrifft und in die Ebene AA der Figur 5 übertragbar ist. Der Bahnverlauf umfaßt vier Bereiche, die wie folgt angegeben werden können:

I - ein Kreisbogen um den Mittelpunkt $M_{2I}$

III - ein tangential an I anschließende Gerade mit einem Winkel von ca. 6 bis 8° zur Y-Achse

IV - einen tangential an III anschließenden Kreisbogen um $M_3$

II - einen tangential an IV anschließenden Kreisbogen um $M_{2II}$.

Hierbei ist der Abstand des Mittelpunkts $M_{2I}$ von der Gelenklängsachse $R_{1I} \sin^2\delta$ und der Abstand des Mittelpunkts $M_{2II}$ von der Gelenklängsachse $R_{1II} \sin^2\delta$.

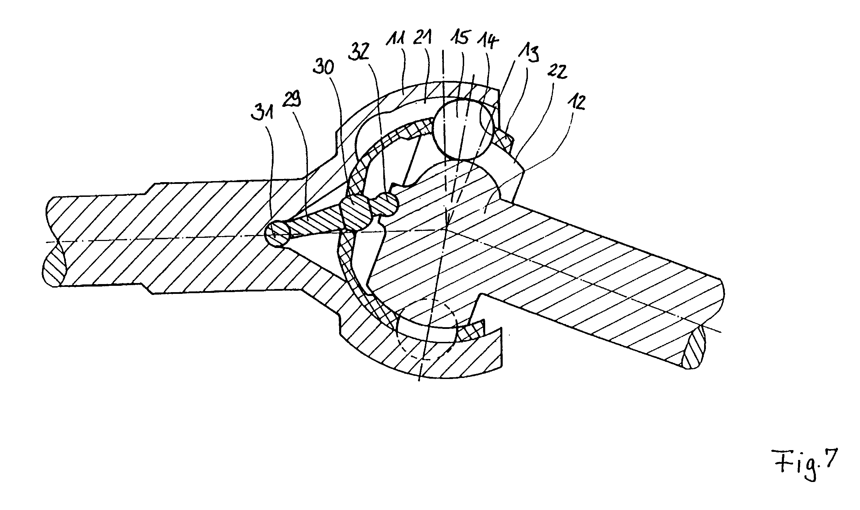

In Figur 7 ist eine auf die Gelenkausführungen nach den Figuren 3 und 5 übertragbare Ausgestaltung der Gelenksteuerung dargestellt, die als solche bekannt ist. Im einzelnen sind nur der Käfig 13, die Kugelnabe 12 und das Gelenkstück 11 bezeichnet, sowie weiterhin ein Pilothebel 29, der einen kugelgelenkartigen Anlenkpunkt 32 in der Kugelnabe 12 und einen kugelgelenkartigen Anlenkpunkt 31 im Gelenkstück 11 jeweils in Achslage hat, der weiterhin über einen Steuerkopf 30 verfügt, der mit dem Käfig 13 zusammenwirkt und diesen bei kleinen Gelenkbeugewinkeln sicher auf die winkelhalbierende Lage zwischen den Achsen $A_1$, $A_2$ der Kugelnabe 12 bzw. des Gelenkstücks 11 führt.

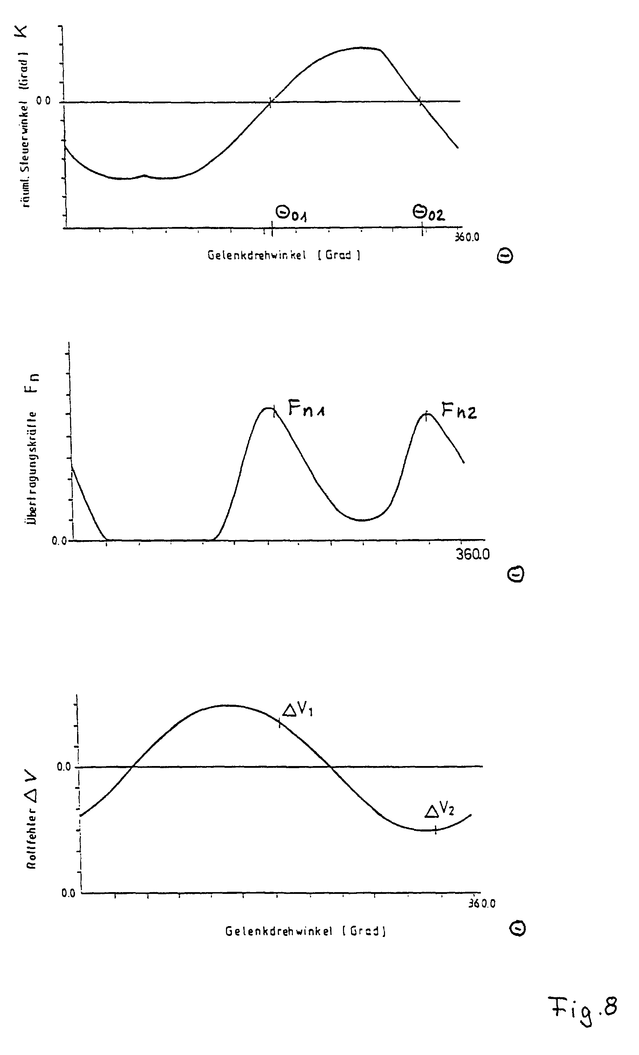

In Figur 8 sind verschiedene Kennwerte an einer Kugel für ein gattungsgemäßes Gelenk nach dem Stand der Technik wie beispielsweise in Figur 1 dargestellt gezeigt, wobei der als Gelenkdrehwinkel $\Theta$ bezeichnete Winkel dem Phasenwinkel $\Theta$ nach Figur 2 entspricht. Der oben dargestellte räumliche Steuerwinkel K hat hierbei zwei Nulldurchgänge auf dem Umlauf einer Kugel von 360° bei abgebeugtem Gelenk. Die hierdurch definierten Phasenwinkel $\Theta_{01}$, $\Theta_{02}$ sind in der Darstellung des Steuerwinkels und in den beiden weiteren Darstellungen markiert. In der Mitte sind die hier als Übertragungskräfte $F_n$ bezeichneten Abstützkräfte an der Kugel gezeigt, die zwei Maxima und zwei Minima aufweisen. Es ist erkennbar, daß die maximalen Übertragungskräfte $F_n$ in der Nähe der Phasenwinkel $\Theta_{01}$ und $\Theta_{02}$ liegen. Infolge dessen liegen bei diesen Phasenwinkeln die Übertragungskräfte $F_{n1}$ und $F_{n2}$ sehr hoch.

In der unteren Darstellung ist der Rollfehler $\Delta v$ über dem Phasenwinkel gezeigt, der auf dem Umlauf der Kugeln zwei Nulldurchgänge hat. Besonders bezeichnet sind hier die Rollfehler $\Delta v_1$, $\Delta v_2$ bei den Phasenwinkeln $\Theta_{01}$ und $\Theta_{02}$, die deutlich von Null abweichen bzw. in der Nähe eines Maximums liegen. Bei Betrachtung der zwei unteren Darstellungen wird erkennbar, daß gerade bei großen Abstützkräften $F_n$ der Rollfehler $\Delta v$ wesentlich von Null verschieden ist.

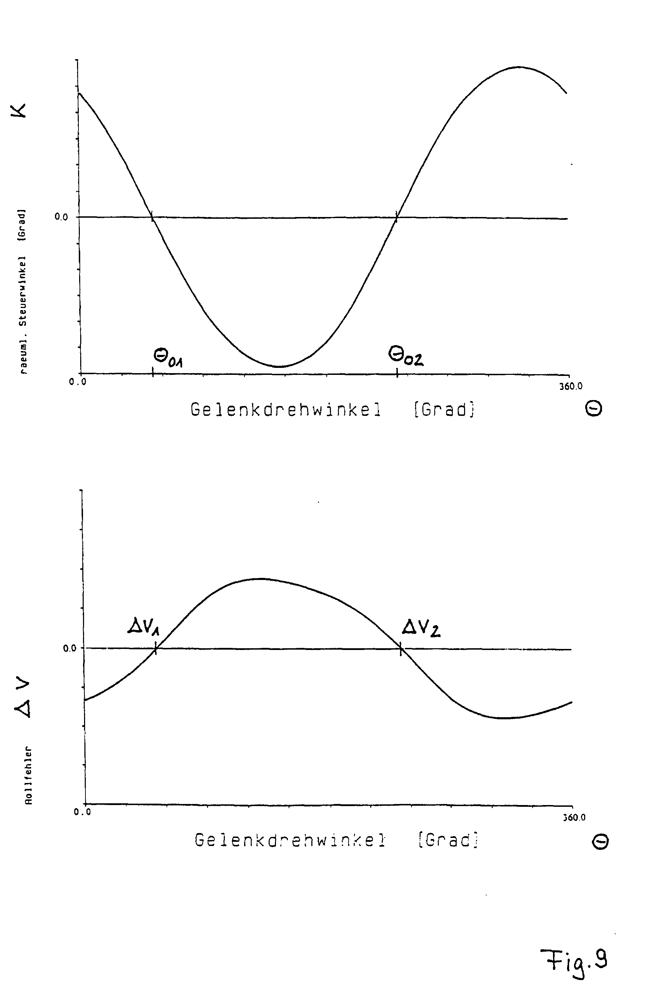

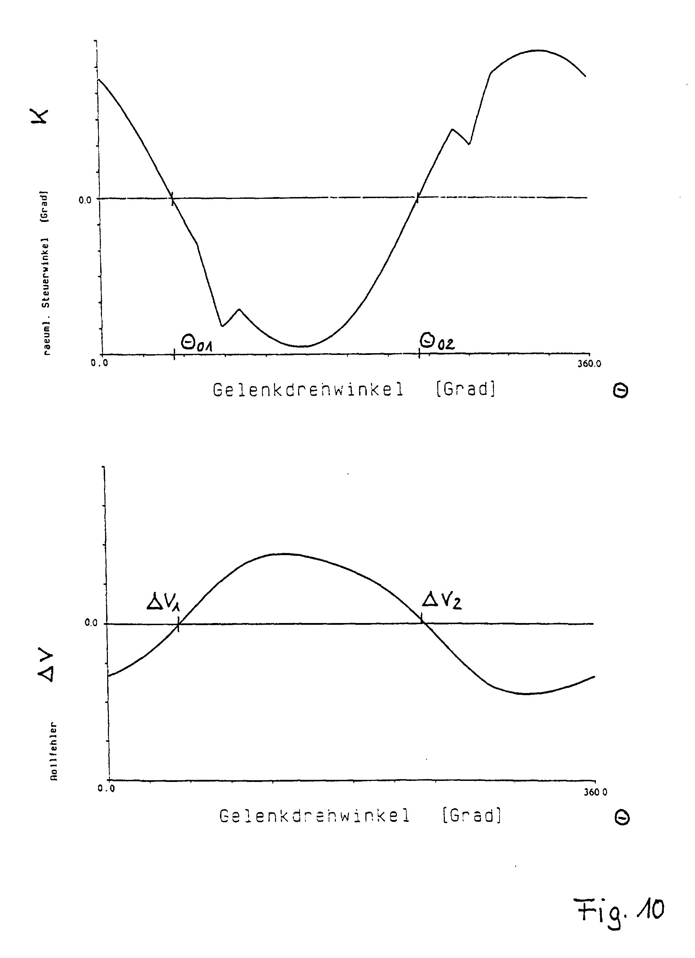

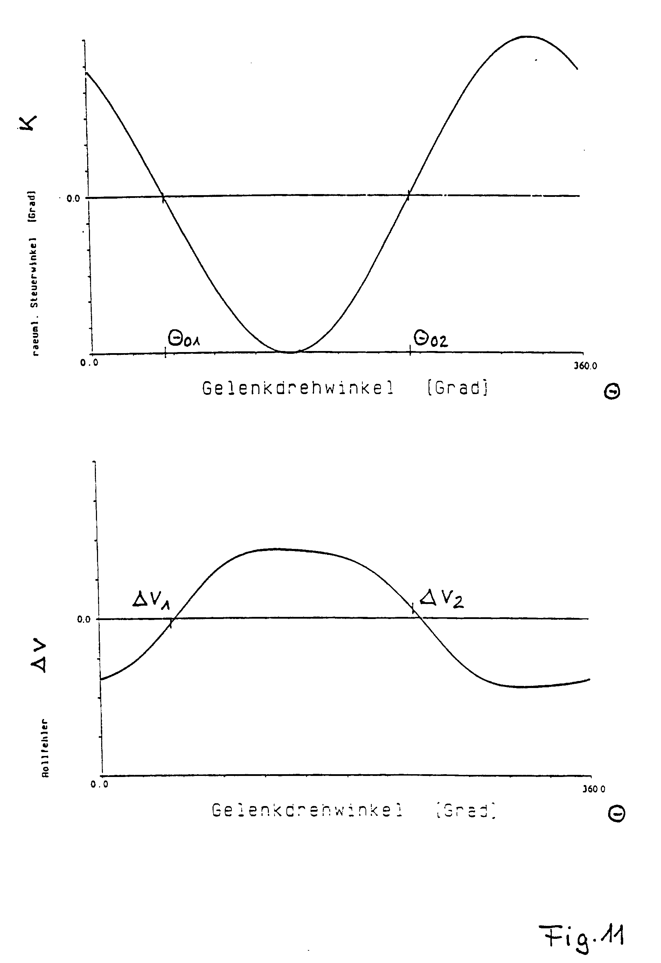

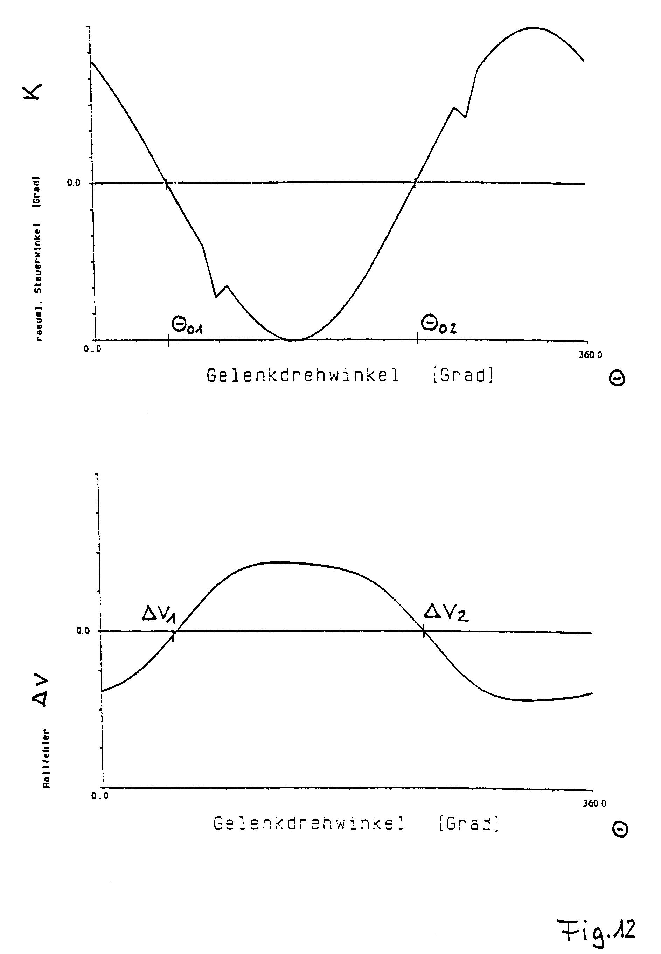

Die Figuren 9 bis 12 zeigen zwei der aus Figur 8 bekannten Kennwerte an einer Kugel jeweils für ein erfindungsgemäßes Gelenk. Hierbei zeigt Figur 9 die Verhältnisse an einem Gelenk nach Figur 3, Figur 10 die Verhältnisse an einem Gelenk nach Figur 4, Figur 11 die Verhältnisse an einem Gelenk nach Figur 5 und Figur 12 die Verhältnisse an einem Gelenk nach Figur 6. Hierbei sind die Nulldurchgänge des räumlichen Steuerwinkels K etwa mit den Nulldurchgängen des Rollfehlers $\Delta v$ in Übereinstimmung gebracht. Ausgehend von der Tatsache, daß beim räumlichen Steuerwinkel K = 0 die Übertragungskräfte $F_n$ etwa ihr Maximum haben, ergibt sich hieraus, daß in günstiger Weise die Maxima der Übertragungskräfte mit minimalen Rollfehlern $\Delta v$ zusammenfallen. Die Unstetigkeiten im räumlichen Steuerwinkel der Gelenke nach den Figuren 10 und 12 entsprechend den Gelenken nach den Figuren 4 und 6 ergeben sich aus der zusammengesetzten Kurvenform der Bahnen. Durch eine Annäherung dieses Kurvenverlaufs, z. B. mit Hilfe einer Polynomannäherung, können diese Unstetigkeiten beseitigt werden.

**Patentansprüche**

1. Kugelgleichlaufdrehgelenk in Festgelenkbauart mit einem Gelenkaußenteil (11) mit innen längsverlaufenden gekrümmten äußeren Kugelbahnen (21), einem Gelenkinnenteil (12) mit außen längsverlaufenden gekrümmten inneren Kugelbahnen (22), einer Mehrzahl von drehmomentübertragenden Kugeln (15), die jeweils in einander zugeordneten äußeren und inneren Kugelbahnen geführt sind, und einem Kugelkäfig (13) mit einer Mehrzahl von Käfigfenstern (14), in denen die Kugeln (15) jeweils aufgenommen sind, wobei die Tangentialebenen an die Kugeln in den bei der Drehmomentübertragung wirksamen Kontaktpunkten der Kugeln (15) mit den äußeren und inneren Kugelbahnen (21, 22) einen räumlichen Steuerwinkel K definieren und wobei die Überlagerung (Superposition) der momentanen örtlichen Relativgeschwindigkeiten in den Kontaktpunkten der äußeren und inneren Kugelbahnen (21, 22) und der Kugeln (15) den Rollfehler $\Delta v$ definiert,
**dadurch gekennzeichnet,**
**daß** die Mittellinien der einander zugeordneten äußeren und inneren Kugelbahnen (21, 22) bei gestrecktem Gelenk jeweils in Ebenen BB liegen, die zu radialen Bezugsebenen YZ durch die zusammenfallenden Mittelachsen des Gelenkaußenteils (11) und des Gelenkinnenteils (12) parallel und in übereinstimmendem Umfangssinn versetzt sind, so daß die Kugelbahnen (21, 22) so gestaltet sind, daß bei gebeugtem Gelenk minimale Steuerwinkel K mit Bereichen minimaler Rollfehler $\Delta v$ zusammenfallen.

2. Gelenk nach Anspruch 1,
**dadurch gekennzeichnet,**
**daß** die Ebene BB den Rollkreis $R_0$ der Kugeln (15) bei gestrecktem Gelenk etwa im gleichen Punkt schneidet wie ein Strahl, der von der Bezugsebene YZ um den Kontaktwinkel $\delta$ entfernt liegt, wobei der Kontaktwinkel $\delta$ als Winkel zwischen den Wirkungslinien der Abstützkräfte an der Kugel (15) und einer Radialen durch die Kugel (15) im Querschnitt durch das gestreckte Gelenk definiert ist. (Figur 3)

3. Gelenk nach einem der Ansprüche 1 oder 2,
**dadurch gekennzeichnet,**
**daß** die Mittellinien der einander zugeordneten äußeren und inneren Kugelbahnen (21, 22) bei gestrecktem Gelenk identische Kreisbögen mit einem gemeinsamen Mittelpunkt $M_1$ sind. (Figur 3)

4. Gelenk nach einem der Ansprüche 1 oder 2,
**dadurch gekennzeichnet,**
**daß** die Mittellinien der einander zugeordneten äußeren und inneren Kugelbahnen (21, 22) bei gestrecktem Gelenk in einem mittleren Bereich jeweils Kreisbögen mit gegenüber der Mittelebene des gestreckten Gelenks (Rollkreisebene) entgegengesetzt axial und gegenüber den zusammenfallenden Mittelachsen des Gelenkaußenteils (11) und des Gelenkinnenteils (12) radial versetzten Mittelpunkten $M_3$ darstellen. (Figur 4)

5. Gelenk nach Anspruch 4,
**dadurch gekennzeichnet,**
**daß** die Kreisbögen in einem Bereich IV einen Winkel von ca. 10 bis 15° überstreichen, an den sich zum einen Ende eine Gerade in einem Bereich III unter ca. 6 bis 8° zu den zusammenfallenden Mittelachsen anschließt und daran wieder ein Kreisbogen in einem Bereich I mit größerem Radius und an den sich zum anderen Ende unmittelbar ein Kreisbogen in einem Bereich II mit größerem Radius anschließt. (Figur 4)

6. Gelenk nach Anspruch 5,
**dadurch gekennzeichnet,**
**daß** die beiden Kreisbögen mit größerem Radius einen gemeinsamen Mittelpunkt $M_1$ in der Mittelebene des gestreckten Gelenks (Rollkreisebene) haben. (Figur 4)

7. Kugelgleichlaufdrehgelenk in Festgelenkbauart mit einem Gelenkaußenteil (11) mit innen längsverlaufenden gekrümmten äußeren Kugelbahnen (21), einem Gelenkinnenteil (12) mit außen längsverlaufenden gekrümmten inneren Kugelbahnen (22), einer Mehrzahl von drehmomentübertragenden Kugeln (15), die jeweils in einander zugeordneten äußeren und inneren Kugelbahnen geführt sind, und einem Kugelkäfig (13) mit einer Mehrzahl von Käfigfenstern (14), in denen die Kugeln (15) jeweils aufgenommen sind, wobei die Tangentialebenen an die Kugeln in den bei der Drehmomentübertragung wirksamen Kontaktpunkten der Kugeln (15) mit den äußeren und inneren Kugelbahnen (21, 22) einen räumlichen Steuerwinkel K definieren und wobei die Überlagerung (Superposition) der momentanen örtlichen Relativgeschwindigkeiten in den Kontaktpunkten der äußeren und inneren Kugelbahnen (21, 22) und der Kugeln (15) den Rollfehler $\Delta v$ definiert,

**dadurch gekennzeichnet,**

**daß** die Mittellinien der einander zugeordneten äußeren und inneren Kugelbahnen (21, 22) bei gestrecktem Gelenk in einer radialen Ebene AA durch die zusammenfallenden Mittelachsen des Gelenkaußenteils (11) und des Gelenkinnenteils (12) liegen und Kreisbögen umfassen, deren Krümmungsradius $R_1$ geringer ist als der Rollkreisradius $R_0$, so daß die Kugelbahnen (21, 22) so gestaltet sind, daß bei gebeugtem Gelenk minimale Steuerwinkel K mit Bereichen minimaler Rollfehler $\Delta v$ zusammenfallen.

8. Gelenk nach Anspruch 7,
**dadurch gekennzeichnet,**
**daß** der Krümmungsradius $R_1$ etwa $R_0 \cos^2\delta$ beträgt, wobei der Kontaktwinkel $\delta$ der Winkel zwischen den Wirkungslinien der Abstützkräfte an der Kugel (15) und einer Radialen durch die Kugel (15) im Querschnitt durch das gestreckte Gelenk ist. (Figur 5)

9. Gelenk nach Anspruch 7,
**dadurch gekennzeichnet,**
**daß** die Mittellinien der einander zugeordneten äußeren und inneren Kugelbahnen (21, 22) identische Kreisbögen um einen gemeinsamen Mittelpunkt $M_2$ sind, der in der Mittelebene des gestreckten Gelenks (Rollkreisebene) liegt. (Figur 5)

10. Gelenk nach Anspruch 7,
**dadurch gekennzeichnet,**
**daß** die Mittellinien der einander zugeordneten äußeren und inneren Kugelbahnen (21, 22) in einem mittleren Bereich IV jeweils Kreisbögen mit gegenüber der Mittelebene des gestreckten Gelenks (Rollkreisebene) entgegengesetzt axial und gegenüber den zusammenfallenden Mittelachsen radial versetzte Mittelpunkten $M_3$ umfassen. (Figur 6)

11. Gelenk nach Anspruch 10,
**dadurch gekennzeichnet,**
**daß** die Kreisbögen in einem Bereich IV einen Winkel von ca. 10 bis 15° überstreichen, an den sich zum einen Ende eine Gerade in einem Bereich III unter ca. 6 bis 8° zu den zusammenfallenden Mittelachsen anschließt und daran wieder ein Kreisbogen in einem Bereich I, und an den sich zum anderen Ende unmittelbar ein Kreisbogen in einem Bereich II anschließt. (Figur 6)

12. Gelenk nach Anspruch 11,
**dadurch gekennzeichnet,**
**daß** die abschließenden Kreisbögen Mittelpunkte haben, die in der Mittelebene des gestreckten Gelenks (Rollkreisebene) liegen und die von den zusammenfallenden Mittelachsen jeweils einen Abstand haben, der jeweils etwa $\sin^2\delta \cdot R_{1I}$ bzw. $\sin^2\delta \cdot R_{1II}$ beträgt, wobei der Kontaktwinkel $\delta$ als Winkel zwischen den Wirkungslinien der Kräfte an der Kugel (15) und einer Radialen durch die Kugel (15) im Querschnitt durch das gestreckte Gelenk definiert ist. (Figur 6)

13. Gelenk nach einem der Ansprüche 1 bis 12,
**dadurch gekennzeichnet,**
**daß** die aus Geraden und Kreisbögen bestehenden Mittellinien angenähert dargestellt werden, z. B. durch Polynomannäherung.

14. Gelenk nach einem der Ansprüche 1 bis 13,
**dadurch gekennzeichnet,**
**daß** der Kugelkäfig (13) zur Zwangssteuerung mit einem Pilothebel (29) zusammenwirkt, der Anlenkpunkte auf der Mittelachse des Gelenkaußenteils (11) und auf der Mittelachse des Gelenkinnenteils (12) hat, und mit einem dazwischenliegenden Steuerpunkt (30) am Kugelkäfig (13) angreift. (Figur 7)

**Claims**

1. A constant velocity universal ball joint of the fixed joint type, having an outer joint part (11) with curved outer ball tracks (21) extending longitudinally on the inside, an inner joint part (12) with curved inner ball tracks (22) extending longitudinally on the outside, a plurality of torque transmitting balls (22) each guided in outer and inner ball tracks associated with one another, a ball cage (13) with a plurality of cage windows (14) accommodating the balls (15), wherein, the tangential planes to the balls in the contact points of the balls (15) with the outer and inner ball tracks (21, 22), which contact points are effective during the transmission of torque, define a spatial control angle K and wherein the superposition of the momentary local relative speeds in the contact points of the outer and inner ball tracks (21, 22) and of the balls (15) defines the rolling error $\Delta v$,

**characterised in**

**that**, when the joint is in the aligned condition, the centre lines of the associated outer and inner ball tracks (21, 22) are positioned in planes BB which are parallel to radial reference planes YZ through the coinciding central axes of the outer joint part (11) and of the inner joint part (12) and which are offset in a coinciding circumferential sense, so that the ball tracks (21, 22) are designed in such a way that, when the joint is articulated, minimum control angles K coincide with regions of minimum rolling errors $\Delta v$.

2. A joint according to claim 1,
   **characterised in**
   **that**, when the joint is in the aligned condition, the plane BB intersects the rolling circle $R_0$ of the balls (15) approximately in the same point as a ray which is removed from the reference plane YZ by the contact angle $\delta$, wherein the contact angle $\delta$ is defined as the angle between the effective lines of the supporting forces at the ball (15) and a radial line through the ball (15) in the cross-section through the aligned joint. (Figure 3).

3. A joint according to any one of claims 1 or 2,
   **characterised in**
   **that**, when the joint is in the aligned condition, the centre lines of the associated outer and inner ball tracks (21, 22) are identical circular arcs with a common centre $M_1$ . (Figure 3).

4. A joint according to any one of claims 1 or 2,
   **characterised in**
   **that**, when the joint is in the aligned condition, the centre lines of the associated outer and inner ball tracks (21, 22), in a central region, constitute circular arcs with centres $M_3$ which are axially offset in opposite directions relative to the central plane of the aligned joint (rolling circle plane) and radially offset relative to the coinciding central axes of the outer joint part (11) and of the inner joint part (12). (Fig. 4).

5. A joint according to claim 4,
   **characterised in**
   **that** the circular arcs in a region IV extend over an angle of 10 to 15° which is followed, at one end, by a straight line in a region III at an angle of approximately 6 to 8° relative to the coinciding central axes, which straight line, in turn, is followed by a circular arc in a region I with a greater radius, and which angle of 10 to 15°, at the other end, is followed directly by a circular arc in a region II with a greater radius. (Figure 4).

6. A joint according to claim 5,
   **characterised in**
   **that** the two circular arcs with a greater radius comprise a common centre $M_1$ in the central plane of the aligned joint (rolling circle plane). (Figure 4).

7. A constant velocity universal ball joint of the fixed joint type, having an outer joint part (11) with curved outer ball tracks (21) extending longitudinally on the inside, an inner joint part (12) with curved inner ball tracks (22) extending longitudinally on the outside, a plurality of torque transmitting balls (22) each guided in outer and inner ball tracks associated with one another, a ball cage (13) with a plurality of cage windows (14) accommodating the balls (15), wherein, the tangential planes to the balls in the contact points of the balls (15) with the outer and inner ball tracks (21, 22), which contact points are effective during the transmission of torque, define a spatial control angle K and wherein the superposition of the momentary local relative speeds in the contact points of the outer and inner ball tracks (21, 22) and of the balls (15) defines the rolling error $\Delta v$,
   **characterised in**
   **that**, when the joint is in the aligned condition, the centre lines of the associated outer and inner ball tracks (21, 22) are positioned in a radial plane AA through the coinciding central axes of the outer joint part (11) and of the inner joint part (12) and comprise circular arcs whose radius of curvature $R_1$ is smaller than the rolling circle radius $R_0$, so that the ball tracks (21, 22) are designed in such a way that, when the joint is articulated, minimum control angles K coincide with regions of minimum rolling errors $\Delta v$.

8. A joint according to claim 7,
   **characterised in**
   **that** the radius of curvature $R_1$ amounts to approximately $R_0 \cos^2\delta$, wherein the contact angle $\delta$ is the angle between the effective line of the supporting forces at the ball (15) and a radial line through the ball (15) in the cross-section through the aligned joint. (Figure 5).

9. A joint according to claim 7,
   **characterised in**
   **that** the centre lines of the associated outer and inner ball tracks (21, 22) are identical circular arcs around a common centre $M_2$ which is positioned in the central plane of the aligned joint (rolling circle plane). (Figure 5).

10. A joint according to claim 7,
    **characterised in**
    **that** the centre lines of the associated outer and inner ball tracks (21, 22) in a central region IV comprise circular arcs with centres $M_3$ which are axially offset in opposite directions relative to the central plane of the aligned joint (rolling circle plane) and radially offset relative to the coinciding central axes. (Figure 6).

**11.** A joint according to claim 10, **characterised in that** the circular arcs in a region IV extend over an angle of 10 to 15° which is followed, at one end, by a straight line in a region III at an angle of approximately 6 to 8° relative to the coinciding central axes, which straight line, in turn, is followed by a circular arc in a region I, and which angle of 10 to 15°, at the other end, is followed directly by a circular arc in a region II. (Figure 6).

**12.** A joint according to claim 11, **characterised in that** the final circular arcs comprise centres which are positioned in the central plane of the aligned joint (rolling circle plane) and which are located at a distance from the coinciding central axes, which amounts to approx. $\sin^2\delta \times R_{1I}$ and $\sin^2\delta \times R_{1II}$ respectively, wherein the contact angle $\delta$ is defined as the angle between the effective lines of the forces at the ball (15) and a radial line through the ball (15) in the cross-section through the aligned joint. (Figure 6).

**13.** A joint according to any one of claims 1 to 12, **characterised in that** the centre lines consisting of straight lines and circular arcs are realized in an approximated form, for example by polynomial approximation.

**14.** A joint according to any one of claims 1 to 13, **characterised in that**, for the purpose of forced control, the ball cage (13) co-operates with a pilot lever (29) which comprises articulation points on the central axis of the outer joint part (11) and on the central axis of the inner joint part (12) and which acts on the ball cage (13) by means of an intermediate control point (30). (Figure 7)

**Revendications**

**1.** Joint à billes homocinétique en construction fixe comportant une partie de joint extérieure (11) avec des pistes à billes (21) extérieures courbées s'étendant longitudinalement à l'intérieur, une partie de joint intérieure (12) avec des pistes à billes (22) intérieures courbées s'étendant longitudinalement à l'extérieur, une multitude de billes (15) transmettant le couple, qui sont chacune guidées dans des pistes à billes extérieures et intérieures mutuellement associées, et une cage à billes (13) avec une multitude de fenêtres de cage (14) dans lesquelles est reçue une bille (15) respective, les plans tangentiels aux billes définissant aux points de contacts des billes (15) actifs lors de la transmission du couple avec les pistes à billes (21, 22) extérieures et intérieures un angle de commande K dans l'espace, et la superposition des vitesses relatives locales momentanées dans les points de contact des pistes à billes (21, 22) extérieures et intérieures et des billes (15) définissant l'erreur de roulement $\Delta v$, **caractérisé en ce que** les lignes médianes des pistes à billes (21, 22) extérieures et intérieures mutuellement associées se trouvent chacune, lorsque le joint est en alignement, dans des plans BB qui sont décalés parallèlement et dans un sens circonférentiel concordant par rapport à des plans de référence radiaux YZ, en raison de la coïncidence des axes médians de la partie de joint extérieure (11) et de la partie de joint intérieure (12), de sorte que les pistes à billes (21, 22) sont réalisées telles que lorsque le joint est plié, des angles de commande K minimaux coïncident avec des régions d'erreur de roulement $\Delta v$ minimale.

**2.** Joint selon la revendication 1, **caractérisé en ce que** le plan BB coupe le cercle de roulement $R_0$ des billes (15) lorsque le joint est en alignement approximativement au même point qu'un rayon qui est éloigné du plan de référence YZ de la valeur de l'angle de contact $\delta$, l'angle de contact $\delta$ étant défini comme angle entre les lignes d'action des forces d'appui sur la bille (15) et une ligne radiale passant à travers la bille (15) en section transversale à travers le joint en alignement. (Figure 3).

**3.** Joint selon l'une ou l'autre des revendications 1 et 2, **caractérisé en ce que** lorsque le joint est en alignement, les lignes médianes des pistes à billes (21, 22) extérieures et intérieures mutuellement associées sont des arcs de cercle identiques avec un centre $M_1$ commun. (Figure 3)

**4.** Joint selon l'une ou l'autre des revendications 1 et 2, **caractérisé en ce que** lorsque le joint est en extension, les lignes médianes des pistes à billes (21, 22) extérieures et intérieures mutuellement associées constituent dans une région médiane des arcs de cercle respectifs avec des centres $M_3$ décalés axialement à l'opposé par rapport au plan médian du joint en alignement (plan du cercle de roulement) et décalés radialement par rapport aux axes médians coïncidents de la partie de joint extérieure (11) et de la partie de joint intérieure (12). (Figure 4)

**5.** Joint selon la revendication 4, **caractérisé en ce que** les arcs de cercle couvrent dans une région IV un angle d'environ 10 à 15° auquel se raccorde, à une extrémité, une droite dans une région III sous environ 6 à 8° par rapport aux axes médians coïncidents, à quoi se raccorde encore un arc de cercle dans une région I avec un rayon plus grand, et auquel, à l'autre extrémité, se raccorde directement un arc de cercle dans une région II de rayon plus grand. (Figure 4).

**6.** Joint selon la revendication 5, **caractérisé en ce que** les deux arcs de cercle avec rayon plus grand ont un centre $M_1$ commun dans le plan médian du joint en extension (plan de cercle de roulement). (Figure 4)

**7.** Joint à billes homocinétique en construction fixe comportant une partie de joint extérieure (11) avec des pistes à billes (21) extérieures courbées s'étendant longitudinalement à l'intérieur, une partie de joint intérieure (12) avec des pistes à billes (22) intérieures courbées s'étendant longitudinalement à l'extérieur, une multitude de billes (15) transmettant le couple, qui sont chacune guidées dans des pistes à billes extérieures et intérieures mutuellement associées, et une cage à billes (13) avec une multitude de fenêtres de cage (14) dans lesquelles est reçue une bille (15) respective, les plans tangentiels aux billes définissant aux points de contacts des billes (15) actifs lors de la transmission du couple avec les pistes à billes (21, 22) extérieures et intérieures un angle de commande K dans l'espace, et la superposition des vitesses relatives locales momentanées dans les points de contact des pistes à billes (21, 22) extérieures et intérieures et des billes (15) définissant l'erreur de roulement $\Delta v$,
**caractérisé en ce que**
les lignes médianes des pistes à billes (21, 22) extérieures et intérieures mutuellement associées se trouvent chacune, lorsque le joint est en alignement, dans un plan radial AA en raison de la coïncidence des axes médians de la partie de joint extérieure (11) et de la partie de joint intérieure (12) et comprennent des arcs de cercle dont le rayon de courbure $R_1$ est inférieur au rayon de cercle de roulement $R_0$, de sorte que les pistes à billes (21, 22) sont réalisées telles que lorsque le joint est fléchi, des angles de commande K minimaux coïncident avec des régions d'erreur de roulement $\Delta v$ minimale.

**8.** Joint selon la revendication 7, **caractérisé en ce que** le rayon de courbure $R_1$ est d'environ $R_0 \cos^2\delta$, l'angle de contact $\delta$ étant l'angle entre les lignes d'action des forces d'appui sur la bille (15) et une ligne radiale à travers la bille (15) en section transversale à travers le joint en extension. (Figure 5).

**9.** Joint selon la revendication 7, **caractérisé en ce que** les lignes médianes des pistes à billes (21, 22) extérieures et intérieures mutuellement associées sont des arcs de cercle identiques autour d'un centre $M_2$ commun qui se trouve dans le plan médian du joint en extension (plan de cercle de roulement). (Figure 5)

**10.** Joint selon la revendication 7, **caractérisé en ce que** les lignes médianes des pistes à billes (21, 22) extérieures et intérieures mutuellement associées comprennent dans une région médiane IV des arcs de cercle respectifs avec des centres $M_3$ décalés axialement à l'opposé par rapport au plan médian du joint en extension (plan de circuit de roulement) et décalés radialement par rapport aux axes médians coïncidents. (Figure 6)

**11.** Joint selon la revendication 10, **caractérisé en ce que** les arcs de cercle couvrent dans une région IV un angle d'environ 10 à 15° auquel se raccorde, à une extrémité, une droite dans une région III sous environ 6 à 8° par rapport aux axes médians coïncidents, à quoi se raccorde encore un arc de cercle dans une région I avec un rayon et auquel, à l'autre extrémité, se raccorde directement un arc de cercle dans une région II de rayon. (Figure 6)

**12.** Joint selon la revendication 11, **caractérisé en ce que** les arcs de cercle d'extrémité ont des centres qui se trouvent dans le plan médian du joint en extension (plan de cercle de roulement) et qui ont chacun une distance par rapport aux axes médians coïncidents qui est approximativement de $\sin^2\delta \cdot R_{1I}$ et $\sin^2\delta \cdot R_{1II}$ respectivement, l'angle de contact $\delta$ étant défini comme angle entre les lignes d'action des forces sur la bille (15) et une ligne radiale passant à travers la bille (15) en section transversale à travers le joint en extension. (Figure 6)

**13.** Joint selon l'une quelconque des revendications 1 à 12, **caractérisé en ce que** les lignes médianes constituées par des droites et des arcs de cercle sont représentées de manière approximative, par exemple par approximation polynomiale.

**14.** Joint selon l'une quelconque des revendications 1 à 13, **caractérisé en ce qu'**en vue d'une commande forcée, la cage à billes (13) coopère avec un levier pilote (29) qui a des points d'articulation sur l'axe médian de la partie de joint extérieure (11) et sur l'axe médian de la partie de joint intérieure (12) et qui attaque la cage à billes (13) avec un point de commande (30) situé entre elles. (Figure 7)

Fig 1

a)

b)

Ansicht A

a)

b)

Fig. 2

EP 0 918 948 B1

Schnitt B-B

$R1 = R0 \cdot \cos \delta$

Fig. 3

a)

b)

$\dfrac{\beta}{2}$ max.

III IV

I II

$\dfrac{\beta}{2}$ max.

ca. 10 – 15°

ca. 6 – 8°

M3

X

M1

Schnitt B-B

Fig. 4

EP 0 918 948 B1

EP 0 918 948 B1

a)

Z

A

$\theta = \delta$

$\delta$

$F_n$

$F_n$

$\delta$

$F_n$

$F_n$

$F_n$

R1

M2

Y

R0

X

A   0

Schnitt A-A

Z

R1

M2

Y

0

$(1 - \cos^2 \delta) \cdot R0 = \sin^2 \delta \cdot R0$

b)

Fig. 5

Fig. 6

Fig. 7

Fig.8

Fig.9

Fig. 10

Fig. 11

Fig.12